# EUROPÄISCHE PATENTANMELDUNG

(11) **EP 4 611 199 A1**
(43) Veröffentlichungstag der Anmeldung: **03.09.2025**
(21) Anmeldenummer: 25160099.5
(22) Anmeldetag: 25.02.2025
(51) Int. Cl.: H02J 1/10, H02J 1/14, H02J 4/00, H02J 7/34

(54) **VORRICHTUNG ZUR STABILISIERUNG EINES GLEICHSTROMNETZES**

(30) Priorität: 01.03.2024 DE 102024106040
(71) Anmelder: Jungheinrich Aktiengesellschaft, 22047 Hamburg (DE)
(72) Erfinder: Petersen, Marinus, 24536 Neumünster (DE)
(74) Vertreter: Hauck Patent- und Rechtsanwälte PartmbB

(57) **Zusammenfassung**

Vorrichtung für Stabilisierung eines Gleichstromnetzes zur Versorgung von elektrischen Verbrauchern, wobei die elektrischen Verbraucher aus dem Bereich der Intralogistik stammen und auch Flurförderzeuge umfassen, die zeitweise mit dem Gleichstromnetz verbindbar sind und von denen einige einen internen elektrischen Energiespeicher zur Speicherung von elektrischer Leistung aufweisen, der aus dem Gleichstromnetz geladen wird und in das Gleichstromnetz elektrische Leistung abgeben kann, wobei das Gleichstromnetz zudem eine Netzsteuerung aufweist, die zur Stabilisierung des Netzes mindestens einen der Verbraucher dahingehend ansteuert, dass der mit dem Gleichstromnetz verbundene elektrische Verbraucher
• entweder seine Leistungsaufnahme reduziert und/oder gespeicherte Leistung aus seinem internen elektrischen Energiespeicher einspeist
• oder mehr Leistung entnimmt und/oder weniger gespeicherte Leistung aus einem internen elektrischen Energiespeicher einspeist,
wobei die Netzsteuerung bei einem geplant erhöhten Leistungsverbrauch oder einer geplanten reduzierten Leistungsbereitstellung von Energieerzeugern an die Flurförderzeuge Signale sendet, um eine Ladeposition anzusteuern, in der eine elektrische Verbindung mit dem Gleichstromnetz besteht.

## Beschreibung

Die vorliegende Erfindung betrifft eine Vorrichtung zur Stabilisierung eines Gleichstromnetzes.

Wechselstromnetze sind bei der Energieversorgung in vielen Bereichen der Technik bekannt. Hierbei müssen die angeschlossenen Verbraucher die anliegende Wechselspannung entsprechend der benötigten Leistung umsetzen, wodurch es zu Energieverlusten beispielsweise durch ein mehrfaches Umsetzen von Gleichspannung auf Wechselspannung und umgekehrt kommen kann. In Gleichstromnetzen, die zugleich immer auch Gleichspannungsnetze sind, können Energieverluste durch mehrfaches Umwandeln von Gleich- und Wechselspannung vermieden werden. Nachfolgend wird nicht zwischen Gleichstrom- und Gleichspannungsnetzen unterschieden.

Bei der Verteilung von Energie innerhalb eines lokalen Netzwerks besitzt Gleichstrom den Vorteil, dass unnötige Energieumwandlung verhindert und damit die Energieeffizienz des Gesamtsystems erhöht wird. Typische Gleichspannungen, die für ein solches Gleichstromnetz gewählt werden, liegen zwischen 600 V bis 800 V. Ein solches Gleichstromnetz kann dauerhaft oder zeitweise mit elektrischen Verbrauchern verbunden sein. Die elektrischen Verbraucher können hierbei stationäre Maschinen oder mobile Fahrzeuge sein. Weiterhin ist für ein solches Gleichstromnetz vorgesehen, dass zumindest einige der elektrischen Verbraucher einen internen elektrischen Energiespeicher zur lokalen Speicherung von elektrischer Leistung aufweisen. Der elektrische Energiespeicher kann dabei bidirektional arbeiten, also Leistung aus dem Gleichstromnetz aufnehmen und Leistung in das Gleichstromnetz abgeben.

Der vorliegenden Erfindung liegt die Aufgabe zugrunde, ein Gleichstromnetzwerk zur Verfügung zu stellen, das mit einfachen Mitteln energieeffizient arbeiten kann.

Die Vorrichtung zur Stabilisierung eines Gleichstromnetzes mit den Merkmalen aus Anspruch 1 löst diese Aufgabe. Bevorzugte Ausgestaltungen bilden die Gegenstände der Unteransprüche.

Die erfindungsgemäße Vorrichtung gemäß Anspruch 1 ist vorgesehen und bestimmt zur Stabilisierung eines Gleichstromnetzes zur Versorgung von elektrischen Verbrauchern. Bei den elektrischen Verbrauchern kann es sich um dauerhaft mit dem Gleichstromnetz verbundene Verbraucher oder um solche handeln, die nur zeitweise mit dem Gleichstromnetz verbunden sind. Einige der elektrischen Verbraucher sind mit einem internen elektrischen Energiespeicher zur Speicherung von elektrischer Leistung ausgestattet, der aus dem Gleichstromnetz geladen und Leistung in das Gleichstromnetz abgeben kann. Das Gleichstromnetz ist zudem mit einer Netzsteuerung und einer Messeinrichtung ausgestattet. Die Messeinrichtung misst eine in dem Gleichstromnetz bereitgestellte elektrische Größe, wie beispielsweise Spannung, Strom, verfügbare Leistung oder andere elektrische Größen. Die gemessene elektrische Größe liegt an der Netzsteuerung an, die zur Stabilisierung des Netzes mindestens einen der Verbraucher ansteuert. Hierbei kann der elektrische Verbraucher dauerhaft oder zeitweise mit dem Gleichstromnetz verbunden sein. Der oder die mit dem Gleichstromnetz verbundenen elektrischen Verbraucher werden von der Netzsteuerung entweder dahingehend angesteuert, dass diese ihre Leistungsaufnahme reduzieren und/oder gespeicherte Leistung aus mehreren internen elektrischen Energiespeichern in das Gleichstromnetz einspeisen oder alternativ dahingehend angesteuert, mehr Leistung aus dem Gleichstromnetz zu entnehmen und/oder weniger gespeicherte Leistung aus einem internen elektrischen Energiespeicher einzuspeisen. Der Hintergrund hierbei ist, dass das Gleichstromnetz stabilisiert wird, indem entweder aus diesem weniger Leistung entnommen und/oder mehr Leistung aus den internen Energiespeichern eingespeist wird. Die Netzwerksteuerung hat also Möglichkeiten, auf die Verbraucher des Gleichstromnetzes dahingehend einzuwirken, dass weniger Leistung aus dem Gleichstromnetz entnommen und/oder mehr Leistung in das Gleichstromnetz eingespeist wird. Untechnisch gesprochen, wird also die verfügbare Leistung in dem Gleichstromnetz erhöht. Alternativ kann, wenn die von der Messeinrichtung erfasste elektrische Größe dies vorgibt, auch der umgekehrte Effekt durchgeführt werden, nämlich dass mehr Leistung aus dem Gleichstromnetz entnommen und/oder weniger gespeicherte Leistung in das Gleichstromnetz eingespeist wird. Der Vorteil der erfindungsgemäßen Vorrichtung zur Stabilisierung des Gleichstromnetzes besteht darin, dass es über die Netzsteuerung möglich ist, die Verbraucher des Gleichstromnetzes anzusteuern, um durch ihr Leistungsverhalten am Netz das Gleichstromnetz zu stabilisieren. Eine solche Stabilisierung ist besonders effektiv, da keine zusätzlichen Einrichtungen zur Stabilisierung des Netzes vorgesehen werden müssen. Dies unterscheidet das erfindungsgemäße Gleichstromnetz deutlich von Gleichstromnetzen, bei denen durch zusätzliche elektrische Komponenten die Stabilisierung des Netzes vorgenommen wird.

Erfindungsgemäß sendet die Netzsteuerung bei einem geplant erhöhten Leistungsverbrauch oder einer geplanten reduzierten Leistungsbereitstellung von Energieerzeugern an die Flurförderzeuge Signale, um eine Ladeposition anzusteuern, in der eine elektrische Verbindung mit dem Gleichstromnetz besteht.

Die erfindungsgemäße Netzsteuerung beruht darauf, dass das einerseits bei erneuerbaren Energiequellen gewisse Prognosen für die erzeugte Energie in die Zukunft möglich sind, anderseits bei den Verbrauchern und den Fahrzeugen mit ihren mobilen Energiespeichern in der Intralogistik gewisse Vorhersagen treffen lassen, mit denen das Gleichspannungsnetz stabilisiert werden kann.

In einer bevorzugten Ausgestaltung ist die gemessene elektrische Größe die Spannung in dem Gleichstromnetz. Der mit dem Gleichstromnetz verbundene elektrische Verbraucher, sei es, dass er dauerhaft oder temporär mit dem Gleichstromnetz verbunden ist, kann im Fall einer Unterspannung seine Leistungsaufnahme aus dem Gleichstromnetz reduzieren und/oder gespeicherte Leistung aus seinem Energiespeicher in das Gleichstromnetz einspeisen. Im Falle einer Überspannung ist vorgesehen, die Leistungsentnahme zu vergrößern und/oder weniger gespeicherte Leistung aus einem internen elektrischen Energiespeicher einzuspeisen. Die angesprochenen Fälle der Überspannung und der Unterspannung können durch den Vergleich des gemessenen Wertes der elektrischen Spannung im Gleichstromnetz ermittelt werden. Hierzu können jeweils eine Ober- und eine Untergrenze definiert sein, gegenüber der ein Vergleich mit dem Sollwert erfolgt. So kann vorgesehen sein, dass, wenn der gemessene Wert der elektrischen Spannung die Obergrenze des Sollwerts überschreitet, der Überspannungsfall vorliegt. Ebenso kann beim Unterschreiten der Untergrenze des Sollwerts der Unterspannungsfall vorliegen. Obergrenze und Untergrenze des Sollwertes können verschiedene Werte besitzen. Durch die variable Definition des Über- und Unterspannungsfalls ist es möglich, das Gleichstromnetz zuverlässig zu stabilisieren. Ebenso ist es möglich eine charakteristische Kennlinie vorzusehen, die abhängig von einem aktuellen Spannungswert eine einzuspeisende oder eine zu entnehmende Leistung definiert.

In einer bevorzugten Ausgestaltung der erfindungsgemäßen Vorrichtung stammen die elektrischen Verbraucher aus dem Bereich der Intralogistik und umfassen auch Flurförderzeuge. Bei den Flurförderzeugen kann es sich um die verschiedensten Formen von Flurförderzeugen handeln. So kann es sich um manuell betriebene Flurförderzeuge handeln, die mit einem bidirektionalen Gleichstromgerät ausgestattet sind, beispielsweise mit einem bidirektionalen Ladegerät. Es kann sich auch um automatisch geführte Fahrzeuge (AGV) handeln, die ebenfalls mit einem bidirektionalen Gleichstromgerät, insbesondere Ladegerät verbunden werden können. Es kann sich neben den klassischen Flurförderzeugen auch um Schmalgangfahrzeuge (VNA) handeln, die automatisch oder halbautomatisch in dem Lager arbeiten. VNA können ganz oder teilweise ihre elektrische Leitung während des Betriebs über Schienen beziehen. Da sie als Schmalgangfahrzeuge auf ihrer Fahrt räumlich festgelegt sind, können diese schienengebunden mit Leistung versorgt werden. Auch Regalbediengeräte (RBG) oder auch sogenannte automatische Regalbediengeräte (ASRS-Geräte) beziehen über fest installierte DC-Stromleitungen ihren Gleichstrom und können somit als Flurförderzeuge im Bereich der Logistik angesehen werden. In einer bevorzugten Ausgestaltung wird der zu erwartende Verbrauch und die zu erwartende Verwendung der Flurförderzeuge projiziert und mit einem Verbrauch von anderen Verbrauchern durch die Netzsteuerung abgestimmt. Die Projektion des zu erwartenden Verbrauchs der Flurförderzeuge kann anhand einer Reihe von Kriterien erfolgen, so beispielsweise die vorhandenen Transportaufträge, der elektrische Ladezustand der einzelnen Fahrzeuge, Schichtzeiten für die Fahrzeuge und weitere Größen, die die benötigte elektrische Leistung der Flurförderzeuge beeinflussen. In der bevorzugten Weiterführung ist es möglich, diesen vorherzusehenden Verbrauch der Flurförderzeuge abzustimmen auf den Bedarf der weiteren Verbraucher. Der Vorteil dieser Ausgestaltung ist, dass der Energieverbrauch der vorhandenen Fahrzeuge sehr gut planbar ist. Dies ist darin begründet, dass die Fahrzeuge für einen batteriegespeisten Betrieb über eine längere Zeitdauer ausgelegt sind. Es kann also sehr flexibel der Zeitpunkt und die Menge an aufzunehmender oder abzugebender Energie für das einzelne Fahrzeug geplant werden, falls das lokale Gleichstromnetz stabilisiert werden muss. Da die Fahrzeuge in der Regel nicht sofort geladen werden müssen, kann dies auch vorausschauend erfolgen und auch abgestimmt auf den Energieverbrauch oder die -erzeugung weiterer mit dem Netz verbundener Anlagen. Auch kann die Planung von Transportaufträgen hierbei berücksichtigt werden, wobei je nachdem, ob eine Netzstabilisierung erforderlich oder geplant ist, Transportaufträge insbesondere von AGVs (Automatic Guided Vehicles) mit hoher Priorität weiterhin durchgeführt werden können, während Transportaufträge von AGVs mit niedrigerer Priorität verschoben werden können, um diese Fahrzeuge und Fahrzeuge ohne aktuellen Transportauftrag ans Ladegerät zu rufen und deren Energiespeicher als Energiequelle oder -senke für die Netzstabilisierung verwenden zu können.

In einer bevorzugten Ausgestaltung ist das Gleichstromnetz auch mit einem oder mehreren elektrischen Erzeugern ausgestattet. Die erzeugte elektrische Leistung und/oder die im Erzeuger gespeicherte elektrische Leistung kann in das Gleichstromnetz eingespeist werden. Hierbei ist es so, dass ein elektrischer Erzeuger wie beispielsweise eine Photovoltaikanlage ihre Gleichspannung in das Gleichstromnetz einspeisen kann. Auch kann vorgesehen sein, dass der Erzeuger einen Speicher aufweist, mit dem elektrische Leistung an dem Erzeuger zwischengespeichert werden kann. Auch diese zwischengespeicherte elektrische Leistung kann dann kurzfristig in das Gleichstromnetz eingespeist werden.

Bei der Verwendung eines elektrischen Erzeugers mit einem Speicher kann auch vorgesehen sein, dass im Fall der Überspannung Leistung aus dem Gleichstromnetz entnommen und in dem Erzeuger gespeichert wird. Der elektrische Speicher des Erzeugers dient, wie der elektrische Energiespeicher in dem Verbraucher, zur Speicherung von elektrischer Leistung aus dem Netz heraus.

In einer bevorzugten Weiterführung sind ein oder mehrere Elektromotoren mit dem Gleichstromnetz verbunden und werden über jeweils einen Gleichspannungswandler mit elektrischer Leistung versorgt. Auch hier verringert die Verwendung eines Gleichspannungswandlers die elektrischen Verluste, die durch die Spannungswandlung auftreten können. Es kann sich bei diesen Motoren um Antriebe von Produktionsanlagen, insbesondere energieintensiven Anlagen, handeln.

In einer bevorzugten Weiterbildung können die als elektrische Verbraucher vorgesehenen Flurförderzeuge zeitweise zum Laden ihres mitgeführten Energiespeichers mit dem Gleichstromnetz verbunden sein. In diesem verbundenen Zustand hat die Netzsteuerung auch Zugriff auf die Energiespeicher der zum Laden angeschlossenen Flurförderzeuge. So kann beispielsweise im Falle der Unterspannung der mitgeführte Speicher entladen oder im Falle der Überspannung vermehrt geladen werden.

In einer bevorzugten Weiterbildung des erfindungsgemäßen Verfahrens können automatisch fahrende Flurförderzeuge von der Netzsteuerung Signale empfangen, um eine Ladeposition anzusteuern, in der sie eine elektrische Verbindung mit dem Gleichstromnetz besitzen. Auf diese Weise bekommt die Netzsteuerung auch Zugriff auf den elektrischen Speicher der automatisch fahrenden Flurförderzeuge. Indem die Netzsteuerung zusätzlich noch ein Signal absetzen kann, dass die automatisch fahrenden Flurförderzeuge sich mit dem Gleichstromnetz verbinden sollen, besteht auch die Möglichkeit, in Situationen, in denen zusätzlicher Speicherbedarf für das Gleichstromnetz auftritt, diesen vorausschauend bereitzustellen, indem die automatisch fahrenden Flurförderzeuge sich mit dem Gleichstromnetz verbinden.

In einer weiteren bevorzugten Ausgestaltung ist eine Steuerung für Fahraufträge, beispielsweise durch ein Warehouse-Management-System (= WMS), vorgesehen. Mit der Steuerung der Fahraufträge können anstehende Fahraufträge auch so eingeteilt werden, dass eine vorbestimmte Menge an elektrischer Leistung, die dem Gleichstromnetz entnommen wird, nicht überschritten wird. Insbesondere bei Flurförderzeugen, die dauerhaft mit dem Gleichstromnetz verbunden sind, wie beispielsweise VNA oder Regalbediengeräte (ASRS), die über Schienen an das Gleichstromnetz angeschlossen sind, kann bei der Abarbeitung der Fahraufträge sichergestellt werden, dass das nur eine Höchstzahl in Betrieb ist und so die entnommene elektrische Leistung aus dem Gleichstromnetz nicht überschritten wird.

Als interne elektrische Energiespeicher für die Verbraucher können Kondensatoren, insbesondere Ultrakondensatoren, vorgesehen sein. Kondensatoren zeichnen sich durch ihr schnelles Ladeverhalten aus und sind damit insbesondere zur Netzstabilisierung gut einsetzbar.

Auch ist es möglich, als interne elektrische Energiespeicher Festkörperakkumulatoren, Lithium-Ionenbatterien, Natrium-Ionenbatterien oder andere Batterien vorzusehen. Festkörperakkumulatoren werden üblicherweise in Flurförderzeugen als elektrische Energiespeicher verwendet und zeichnen sich durch ihre gute Energiedichte aus.

Bevorzugt ist die Netzsteuerung für die folgenden Schritte ausgebildet:
- Ansteuerung der Fahrzeuge unter Berücksichtigung der anstehenden Fahraufträge, so dass kein Fahrzeug während eines durchgeführten Transportfahrt zur Ladeposition gerufen wird,
- Drosselung und/ Unterbrechung von Ladevorgängen, im Hinblick auf einen geplanten erhöhten Leistungsverbrauchs von Produktionsanlagen/ Industrieantrieben und/oder eine reduzierte Leistungsbereitstellung von Energieerzeugern, beispielsweise bei niedriger Windgeschwindigkeit oder Bewölkung,
- Rufen von Fahrzeugen zur Ladeposition, um Energie ins Gleichstromnetz einspeisen zu können, wenn ein geplanter erhöhter Leistungsverbrauch von Produktionsanlagen/ Industrieantrieben und/oder eine reduzierte Leistungsbereitstellung von Energieerzeugern, beispielsweise bei niedriger Windgeschwindigkeit oder Bewölkung zu erwarten ist,
- Durchführen von Ladevorgängen bei Fahrzeugen, die eine Soll-Ladeschwelle des Ladezustandes erreicht, aber noch nicht die niedrigere Muss-Ladeschwelle erreicht haben, wenn ein geplanter niedriger Leistungsverbrauch von Produktionsanlagen/ Industrieantrieben und/oder eine erhöhte Leistungsbereitstellung von Energieerzeugern zu erwarten ist.

Weitere Möglichkeiten für die Netzsteuerung beruhen auf einer Unterscheidung des zeitlichen Energiebereitstellungs-/Energieaufnahmebedarfs in der Intralogistik. Hierzu zählen folgende Unterscheidungen:
- Zeitlicher Horizont der bereitzustellenden Energiemenge:
   ∘ ad hoc bereitzustellende/ aufzunehmende Energiemengen, welche durch permanent oder zumindest aktuell mit dem Netz verbundene Energiespeicher bedient werden, insbesondere durch Energiespeicher von Regalbediengeräten und Schmalgangfahrzeugen, die permanent mit dem Netz verbunden sind, wobei "ad hoc" im Sinne einer ungeplanten Schwankung der gemessenen elektrischen Größe zu verstehen ist und dieser Energiebedarf/ Energieüberschuss unmittelbar bedient werden muss, es handelt sich also um transiente Vorgänge im Netz und
   ∘ geplant bereitzustellende/ aufzunehmende Energiemengen, welche durch geplante Ladevorgänge von Energiespeichern bedient werden können, insbesondere durch Energiespeicher von AGVs und manuell geführten Fahrzeugen, wobei geplant bereitzustellende/ aufzunehmende Energiemengen der Netzsteuerung bekannt sind und somit in dieser Weise vorausschauend bedient werden können.
- Quantitative Unterscheidung der Menge an bereitzustellender und/oder aufzunehmender Energie:
   ∘ relevante Energiemengen und/oder Leistungen, die spontan bereitgestellt und/oder aufgenommen werden müssen, welche bevorzugt durch sogenannte supercaps in Regalbediengeräten bereitgestellt werden, wobei diese bevorzugt dazu ausgebildet sind, um sehr schnell, große Mengen an Energie zu speichern oder abzurufen, wobei zur Bereitstellung oder Aufnahme von "relevanten Energiemengen" große Leistungen von 1-100kW für sehr kurze Zeiträume von 1s oder weniger fließen und
   ∘ moderate Energiemengen und/oder Leistungen, welche durch Akkumulatoren der mit dem Gleichstromnetz verbundenen Fahrzeuge bereitgestellt oder aufgenommen werden können, wobei hier Leistungen von 10 kW oder weniger für größere Zeiträume von mehreren Sekunden bis zu Stunden fließen.

Bei der geplant bereitzustellenden/aufzunehmenden Energiemenge kann auch noch eine Priorisierung vorgesehen werden, so dass bei einem entsprechend hohen Bedarf zunächst das AGV zu den Ladegeräten zurückfahren. Sollte der Bedarf größer sein, könnten dann die manuellen Fahrzeuge an die Ladestationen angeschlossen werden. Dies wäre aber ein nur in Ausnahmefällen vorzusehender Schritt, da das Anschließen der manuell geführten Fahrzeuge an die Ladestation den Betrieb im Lager weitgehend unterbricht.

Ein weiterer Unterschied für die Netzsteuerung ist neben der Planbarkeit, der Menge auch die Dauer der Netzstützung. Hier können folgende Fälle unterschieden werden:
- Sehr kurze Dauer der Netzstützung:
   ∘ Dauer < 1s
   ∘ Energie << 1kWh
   ∘ Regalbediengeräte:
      ▪ Laden/Entladen der Energiespeicher,
      ▪ Super-Kondensatoren;
- Kurze Dauer der Netzstützung:
   ∘ Dauer 1 - 60 Sekunden
   ∘ Energie < 1 kWh
   ∘ Schmalgangfahrzeuge und alle zum jeweiligen Zeitpunkt mit Ladegeräten verbundenen Fahrzeuge:
      ▪ Laden/Entladen der Energiespeicher,
      ▪ Li-Ionen-Batterien,
      ▪ Na-Ionen-Batterien;
- Mittelfristige Netzstützung:
   ∘ Dauer 1 - 60 Minuten,
   ∘ Energie 1 ... 10 kWh
   ∘ Alle Fahrzeuge außer manuelle Fahrzeuge, die zum jeweiligen Zeitpunkt im Einsatz sind:
      ▪ Zurückrufen der AGVs an die Ladestationen,
      ▪ Laden/Entladen der Energiespeicher,
      ▪ Li-Ionen-Batterien,
      ▪ Na-Ionen-Batterie,
      ▪ Bleibatterien.
- Dauernde Netzstützung:
   ∘ Dauer > 1 Stunde
   ∘ Energie 1... 100 kWh
   ∘ Alle Fahrzeuge einschließlich der manuellen Fahrzeuge werden:
      ▪ Zurückrufen der AGVs an die Ladestationen,
      ▪ Laden/Entladen der Energiespeicher,
      ▪ Li-Ionen-Batterien,
      ▪ Na-Ionen-Batterie,
      ▪ Bleibatterien.

Entsprechend der oben dargestellten Fälle wird die Netzsteuerung jeweils bevorzugt je nach Dauer der notwendigen Netzunterstützung die oben angegebenen Fahrzeuge für die Netzunterstützung verwenden. Die Netzsteuerung ist dazu ausgebildet, entsprechend der angefragten Energiemenge die Dauer der Netzstützung zu bestimmen und die erforderlichen Schritte für die Netzstützung einzuleiten, wobei hierzu Regalbediengeräte, Schmalgangfahrzeuge und alle zum jeweiligen Zeitpunkt mit Ladegeräten verbundenen Fahrzeuge, alle Fahrzeuge außer manuelle Fahrzeuge, die zum Zeitpunkt der Netzstützung im Einsatz sind oder alle Fahrzeuge einschließlich der manuellen Fahrzeuge entsprechend angesteuert werden.

Die erfindungsgemäße Vorrichtung zur Stabilisierung des Gleichstromnetzes wird nachfolgend anhand einer Reihe von Beispielen erläutert.

Es zeigen:
- Fig. 1: zeigt eine schematische Ansicht eines Gleichstromverteilungsnetzes, das einen zentralen Gleichrichter für ein Gleichstromnetz aufweist,
- Fig. 2: den Vergleich von einem herkömmlichen Gleichstromnetz zu einem Gleichstromnetz mit einem zentralen Wechselrichter,
- Fig. 3a: ein herkömmliches Gleichstromladegerät,
- Fig. 3b: ein Gleichstromladegerät für ein Flurförderzeug und
- Fig. 4: eine Übersichtsfigur für die Anwendung eines Gleichstromnetzes in der Intralogistik.

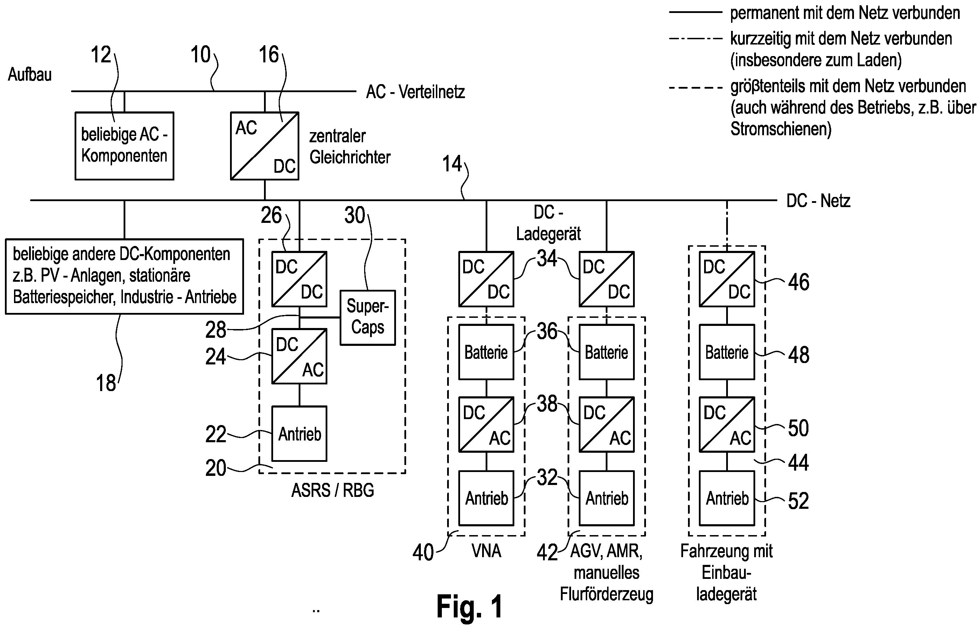

Figur 1 zeigt ein herkömmliches Wechselstromnetz, das beispielsweise beliebige Wechselstromkomponenten 12 speist, für den Übergang zu dem Gleichstromnetz 14, das als Gleichstromnetz diesen räumlich verteilt. Zunächst können Erzeuger 16 mit dem Gleichstromnetz 14 verbunden sein. Als Erzeuger für das Gleichstromnetz 14 sind besonders Fotovoltaikanlagen, stationäre Batteriespeicher und andere Energieerzeuger geeignet. Verbraucher, die zeitweise oder dauerhaft mit dem Gleichstromnetz verbunden sind, sind im Bereich der Logistik beispielsweise Regalbediengeräte (RBG) oder auch automatische Storage- and Retrieval-Systeme (ASRS), die beispielsweise über Schienen mit dem Gleichstromnetz 14 verbunden sind. Für den jeweiligen Antrieb 22 ist ein Wechselrichter 24 vorgesehen, der eine Gleichspannung aus einem Zwischenkreis in die Wechselspannung für den Antrieb 22 umsetzt. Der DC-DC-Gleichrichter setzt die Zwischenkreisspannung auf das von dem Wechselrichter 24 erwartete Niveau um. Hierdurch liegt zwischen dem DC-DC Umrichter 26 und dem Wechselrichter 24 ein Gleichspannungszwischenkreis 28, der sich beispielsweise gut für einen Energiespeicher 30 eignet. Als Energiespeicher 30 kann beispielsweise ein Kondensator, insbesondere ein Hochleistungskondensator, ein Supercap, vorgesehen sein.

Weitere mögliche Verbraucher sind automatische Schmalgangfahrzeuge (VNA) 32, die über ein externes Ladegerät 34 geladen werden können. Das Fahrzeug 32 gelangt in einer vorgegebenen Position in Kontakt mit dem externen Ladegerät 34, das als DC-DC-Umrichter die Batterie 36 des Fahrzeugs 32 speist. Über einen Wechselrichter 38 wird dann der Antrieb 40 des Fahrzeugs angesteuert.

Der vorstehend beschriebene Aufbau für die automatischen Schmalgangregalgeräte findet sich strukturgleich in automatisch fahrenden Fahrzeugen, manuell betätigten Fahrzeugen und autonom mobile Roboter (AMR) mit externem Ladegerät 34 mit dem Unterschied, dass hier die Fahrzeuge während des Transportbetriebs nicht mit dem Ladegerät bzw. Stromschienen verbunden sind. Dies ist in Fig. 1 durch die unterschiedliche Linierung der Verbindung zwischen Fahrzeug und Ladegerät angedeutet. Auch hier wird jedoch über einen DC-DC-Umrichter 34 die fahrzeuginterne Batterie 36 geladen, die über einen Wechselrichter 38 den Antrieb 40 speist.

Dieser Aufbau ändert sich bei Fahrzeugen 44 jeglicher Art mit einem eingebauten Ladegerät. Das eingebaute Ladegerät 46 als ein im Fahrzeug mitgeführter DC-DC-Wechselrichter speist eine Batterie 48, die dann über einen Wechselrichter 50 wieder den Antrieb speist. Das Ladegerät ist hier also Teil des Fahrzeugs.

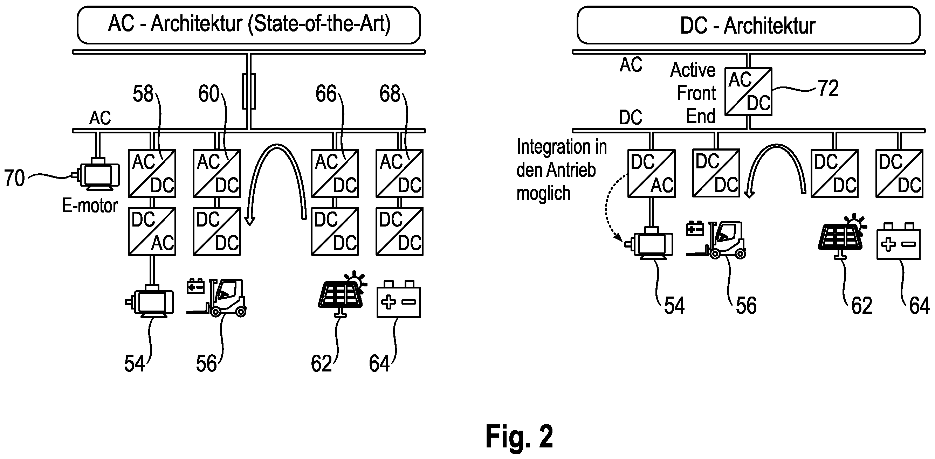

Der mit der Figur 1 dargestellte Aufbau des Gleichstromnetzes 14 ist deutlich einfacher als ein Wechselstrom-Verteilnetz, das in der nachfolgenden Figur 2 dargestellt ist.

Figur 2 zeigt auf der linken Seite ein Wechselstromnetz, bei dem die Wechselspannung räumlich verteilt wird. Deutlich zu erkennen ist, dass die Verbraucher 54 und 56 einen zusätzlichen Wechselrichter 58 und 60 benötigen. Ebenso bei den Erzeugern mit einem Fotovoltaik-Modul 62 und einem Batteriespeicher 64 sind zusätzliche Wechselrichter 66 und 68 erforderlich. Auf der rechten Seite von Figur 2 ist ein Aufbau dargestellt, bei dem ein zentraler Gleichrichter 72 ein Gleichstromnetz 74 speist, an dem die Verbraucher 54, 56, 62, 64 hängen. Durch den Wegfall der AC-DC Gleichrichter 58, 60, 66 und 68 und der Verwendung eines zentralen Gleichrichters 72 wird die Effektivität des Gleichstromnetzes verbessert, beispielsweise weil die Leistung der lokalen Energieerzeuger nicht in eine Wechselspannung zur Einspeisung in das lokale Netz umgewandelt werden muss.

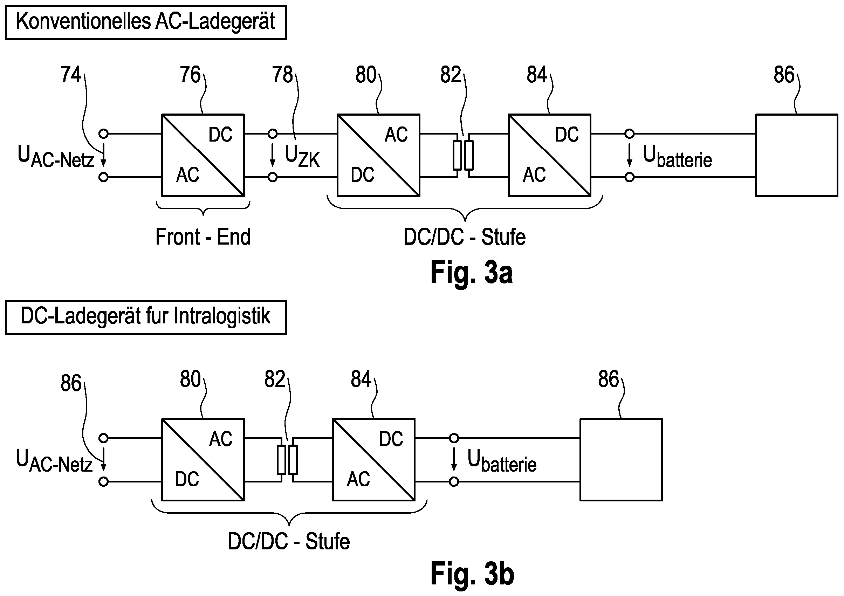

Diese Verbesserung ist auch in der nachfolgenden Figur 3a und 3b zu erkennen. Fig. 3a zeigt ein herkömmliches Wechselstromladegerät 76, an dem die Wechselspannung 74 anliegt. Die so erzeugte Gleichspannung in dem Zwischenkreis 78 liegt an dem Wechselrichter 80 an. Die Wechselspannung wird über einen Transformator 82 mit galvanischer Trennung an einen Gleichrichter 84 übertragen, von wo aus sie die Batterie 86 speist. Figur 3b zeigt, dass der Gleichrichter hier entfallen kann, wenn eine Gleichspannung 86 an dem Wechselrichter 80 anliegt.

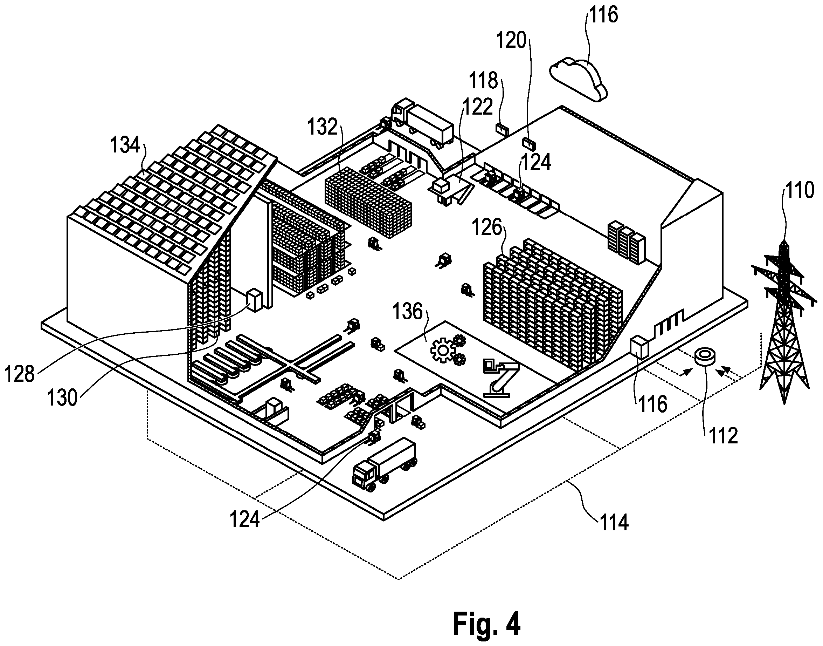

Figur 4 zeigt das Gesamtkonzept für die Stabilisierung eines Gleichstromnetzes in der Logistik. Aus dem Wechselstromübertragungsnetz 110 gibt es einen zentralen Gleichstromwandler 112, der ein Gleichstromverteilungsnetz 114 speist. Ausgehend von dem zentralen Gleichrichter 112 wird ein Batteriespeicher 116 gespeist. Ferner ist ein zentrales Energiemanagementsystem 116 (zweimal vergeben) vorgesehen, das über eine Netzsteuerung 118 sowie eine Messeinrichtung 120 verfügt. Netzsteuerung 118 und Messeinrichtung 120 sind in Figur 4 symbolisch dargestellt.

Über die Gleichstromverteilung werden einerseits elektrische Ladegeräte 122 zum Laden von Flurförderzeugen versorgt. Ferner sind Schmalgangregale 126 vorgesehen, deren Fahrzeuge (VNA) bis auf etwaige Wechsel der Regalgänge dauerhaft mit der Gleichstromversorgung 114 verbunden sind und von dem Batteriemanagementsystem 116 entsprechend angesteuert werden können. Weiterhin können Fahrzeuge mit einem Einbauladegerät 128 direkt am Gleichstromnetz 114 geladen werden. Das Regalbediengerät 130 ist dauerhaft mit der Gleichstromversorgung 114 verbunden und wird von dem Energiemanagementsystem 116 gesteuert. Zudem zeigt Figur 4 manuelle Fahrzeuge 132, die an den externen Ladegeräten 124 geladen werden können. Eingespeist wird auch in die Gleichstromversorgung 114 über eine Fotovoltaikanlage 134, die Gleichspannung erzeugt. Schematisch dargestellt sind auch größere Industrieantriebe 136, die große Verbraucher darstellen. Indem das Energiemanagementsystem 116 auf ein Warenmanagementsystem (WMS) zurückgreift, kann auch vorausschauend der Einsatz der Industrieantriebe 136 geplant werden oder umgekehrt die Ladevorgänge von Flurförderzeugen und AGVs an den geplanten Betrieb der Industrieantriebe angepasst werden.

Für das Gesamtsystem können folgende Eigenschaften zusammengefasst werden: Für die Energiequellen ist eine Kommunikationsverbindung zum Energiemanagementsystem 116 erforderlich. Die PV-Anlagen 134 und die Batteriespeicher 116 werden ebenfalls von dem Energiemanagementsystem 116 angesteuert. Das Ziel der Steuerung ist es, Laden und Entladen der Energiespeicher zur Stabilisierung des Gleichstromnetzes einzusetzen. Dabei wird ein Laden bei einem Überangebot an Energie ausgelöst und ein Entladen bei einem Energiedefizit im Gleichstromnetz. Die Steuerung arbeitet dabei mit einem Zeithorizont von einigen Minuten bis zu einigen Stunden.

Industrieantriebe und sonstiger Antriebe 136 sind ebenfalls zur Kommunikation mit dem Energiemanagementsystem 116 ausgelegt. Sie stellen im Wesentlichen Verbraucher dar, wobei geplante Aufträge der Industrieantriebe 136 und der zugehörigen Roboter gesteuert werden können.

Ferner ist für die Antriebe 136 vorgesehen, dass die Steuerung der Antriebe entsprechend dem aktuellen Energieangebot erfolgt. Damit wird sichergestellt, dass der geplante Betrieb genügend Energie zur Verfügung hat. Hierbei ist es so, dass ein Eingriff in die Antriebe nur im Notfall vorgesehen ist. Primär soll die Steuerung so im Hinblick auf Aufträge der sonstigen Verbraucher erfolgen.

Manuell fahrende Flurförderzeuge 132 oder AGV werden in der Regel über ein externes bidirektionales DC-Ladegerät geladen und besitzen eine Kommunikationsverbindung, beispielsweise über Funk, mit dem Energiemanagementsystem. Das Energiemanagementsystem erfasst Ladezeiten und Pausen der manuellen Flurförderzeuge 132 und den Ladezustand (SOC) und den Gesundheitszustand (SOH) der Batterie. Ebenfalls erfasst das Energiemanagementsystem 116 für die manuellen Flurförderzeuge aktuelle Ladevorgänge und die Belegung der Ladegeräte. Weiterhin können vorausschauend geplante Transportaufträge miterfasst werden. Die Steuerung durch das Energiemanagementsystem 116 erfolgt nun mit dem Ziel Laden und Entladen der aktuell mit den Ladegeräten verbundenen Flurförderzeuge zum Ausgleich des Energiebedarfs anderer Komponenten, insbesondere der Industrieantriebe, im Gleichstromnetz sicherzustellen, beispielsweise um Lastspitzen zu vermeiden. Dies bedeutet, dass die mit dem Gleichstromnetz 114 verbundenen manuellen Flurförderzeuge bei einem (vorhergesehenen) Überangebot an Energie laden und bei einem Energiedefizit entladen werden. Der Zeithorizont dieser Steuerung ist ebenfalls einige Minuten bis einige Stunden.

Manuelle Flurförderzeug mit Einbauladegeräten 128 besitzen ebenfalls eine Kommunikationsverbindung zum Energiemanagementsystem 116. Das Energiemanagementsystem 116 ist ausgelegt, Ladezeiten zu erfassen. Auch der Ladezustand und der Gesundheitszustand der Batterie liegen dem Energiemanagementsystem (EMS) 116 vor. Auch kann für die manuellen Flurförderzeuge mit Einbauladegerät vorgesehen sein, dass die Transportaufträge aus dem WMS auch im Energiemanagementsystem erfasst werden.

Die Steuerung des Energiemanagementsystems 116 sieht ein bedarfsabhängiges Laden und Entladen von automatisch geführten Fahrzeugen mit dem Gleichstromverteilungsnetz vor. Dies erfolgt so wie auch bei den manuellen Flurförderzeugen, die in einem externen Ladegerät geladen werden.

Schmalgangtransportgeräte (VNA) 126 sind ausgestattet für eine quasipermanente Energieversorgung durch Stromschienen. Der Vollständigkeit halber sei angemerkt, dass zwar auch VNA bekannt sind, die wie sonstige Flurförderzeuge über Batterien verfügen und an Ladegeräten geladen werden. Nachfolgend betrachtet werden aber die VNA mit einer quasi permanenten Energieversorgung durch Stromschienen. Ferner ist vorgesehen, dass sie in Kommunikationsverbindung zum Energiemanagementsystem 116 stehen. Bei der Energieversorgung der VNA 126 kann unterschieden werden, ob das VNA 126 sich gerade in einem Gang befindet, in diesem Fall ist es über die Schiene im VNA mit der Gleichstromverteilung verbunden. Bei einem Gangwechsel von einem Gang in einen anderen Gang ist in der Regel keine Schiene zur Stromversorgung verlegt, sodass dann das VNA aus einem lokalen Energiespeicher gespeist wird.

Das Energiemanagementsystem EMS erhält von dem VNA 126 die SOC- und SOH-Daten, sowie geplante Transportaufträge aus dem WMS. Prognostizierte Zeitpunkte und Dauer der Trennung von der Stromschiene, beispielsweise für den Gangwechsel, liegen dem Energiemanagementsystem 116 ebenfalls vor und können berücksichtigt werden.

Die Steuerung durch das Energiemanagementsystem 116 erfolgt dahingehend, dass Gangwechsel in Abstimmung mit dem WMS durchgeführt werden. Erwartet das Energiemanagementsystem Lastspitzen, so kann eine Planung derart erfolgen, dass das VNA nicht den Gang wechselt und so seinen mitgeführten Energiespeicher für eine Steuerung durch das EMS 116 zur Verfügung stellt.

Regalbediengeräte 130 - bevorzugt mit einem Supercap als Energiespeicher - sind fest installiert und mit einer DC-Stromleitung dauerhaft verbunden. Der Input für das Energiemanagement 116 von einem solchen Regalbediengerät 130 ist beispielsweise auch der Ladezustand des Supercap, wodurch das EMS auch dessen Einsatz planen kann.

## Patentansprüche

1. Vorrichtung für Stabilisierung eines Gleichstromnetzes zur Versorgung von elektrischen Verbrauchern, wobei die elektrischen Verbraucher aus dem Bereich der Intralogistik stammen und auch Flurförderzeuge umfassen, die zeitweise mit dem Gleichstromnetz verbindbar sind und von denen einige einen internen elektrischen Energiespeicher zur Speicherung von elektrischer Leistung aufweisen, der aus dem Gleichstromnetz geladen wird und in das Gleichstromnetz elektrische Leistung abgeben kann, wobei das Gleichstromnetz zudem eine Netzsteuerung aufweist, die zur Stabilisierung des Netzes mindestens einen der Verbraucher dahingehend ansteuert, dass der mit dem Gleichstromnetz verbundene elektrische Verbraucher
• entweder seine Leistungsaufnahme reduziert und/oder gespeicherte Leistung aus seinem internen elektrischen Energiespeicher einspeist
• oder mehr Leistung entnimmt und/oder weniger gespeicherte Leistung aus einem internen elektrischen Energiespeicher einspeist,
wobei die Netzsteuerung bei einem geplant erhöhten Leistungsverbrauch oder einer geplanten reduzierten Leistungsbereitstellung von Energieerzeugern an die Flurförderzeuge Signale sendet, um eine Ladeposition anzusteuern, in der eine elektrische Verbindung mit dem Gleichstromnetz besteht.

2. Vorrichtung nach Anspruch 1, **dadurch gekennzeichnet, dass** die Netzsteuerung zusätzlich zur Stabilisierung des Netzes mindestens einen der Verbraucher bei einem geplanten erhöhten Leistungsverbrauch von Produktionsanlagen und/oder Industrieantrieben und/oder bei einer reduzierten Leistungsbereitstellung von Energieerzeugern dahingehend ansteuert, dass der mit dem Gleichstromnetz verbundene elektrische Verbraucher einen Ladevorgang drosselt und/oder unterbricht.

3. Vorrichtung nach Anspruch 1 oder 2, **dadurch gekennzeichnet, dass** die Netzsteuerung zusätzlich zur Stabilisierung des Netzes an die Flurförderzeuge Signale sendet, um eine Ladeposition anzusteuern, in der jeweils eine elektrische Verbindung mit dem Gleichstromnetz besteht, um Ladevorgänge durchzuführen bei Fahrzeugen, die eine Soll-Ladeschwelle des Ladezustandes erreicht, aber noch nicht die niedrigere Muss-Ladeschwelle erreicht haben, wenn ein geplanter niedriger Leistungsverbrauch von Produktionsanlagen/ Industrieantrieben und/oder eine erhöhte Leistungsbereitstellung von Energieerzeugern zu erwarten ist.

4. Vorrichtung nach einem der vorhergehenden Ansprüche, **dadurch gekennzeichnet, dass** in der Netzsteuerung zusätzlich eine Unterscheidung des zeitlichen Energiebereitstellungs- und Energieaufnahmebedarfs zur Stabilisierung des Netzes erfolgt, wobei
- ad hoc bereitzustellende/ aufzunehmende Energiemengen durch permanent oder zumindest aktuell mit dem Netz verbundene Energiespeicher bedient werden, insbesondere durch Energiespeicher von Regalbediengeräten und Schmalgangfahrzeugen, die permanent mit dem Netz verbunden sind und wobei
- geplant bereitzustellende/ aufzunehmende Energiemengen durch geplante Ladevorgänge von Energiespeichern bedient werden, insbesondere durch Energiespeicher von AGVs und manuell geführten Fahrzeugen.

5. Vorrichtung nach einem der vorhergehenden Ansprüche, **dadurch gekennzeichnet, dass** in der Netzsteuerung zusätzlich eine quantitative Unterscheidung der Menge an bereitzustellender und/oder aufzunehmender Energie, wobei
- relevante Energiemengen, die spontan bereitgestellt und/oder aufgenommen werden müssen bevorzugt durch Supercaps in Regalbediengeräten bereitgestellt werden und wobei
- moderate Energiemengen durch Akkumulatoren der mit dem Gleichstromnetz verbundenen Fahrzeuge bereitgestellt oder aufgenommen werden.

6. Vorrichtung nach einem der vorhergehenden Ansprüche, **dadurch gekennzeichnet, dass** die gemessenen elektrische Größe die Spannung in dem Gleichstromnetz ist, wobei der mit dem Gleichstromnetz verbundene elektrische Verbraucher im Falle einer Unterspannung seine Leistungsaufnahme aus dem Gleichstromnetz reduziert und/oder gespeicherte Leistung aus seinem Energiespeicher einspeist um im Falle einer Überspannung die seine Leistungsentnahme vergrößert und/oder weniger gespeicherte Leistung aus seinem internen elektrischen Energiespeicher einspeist.

7. Vorrichtung nach einem der vorhergehenden Ansprüche, **dadurch gekennzeichnet, dass** die Netzsteuerung den gemessenen Wert der elektrischen Spannung im Netz mit einem vorbestimmten Sollwert vergleicht und bei einem Überschreiten einer Obergrenze des Sollwerts eine Überspannung und bei einem Unterschreiten der Untergrenze des Sollwerts eine Unterspannung erkennt.

8. Vorrichtung nach einem der Ansprüche 1 bis 7, **dadurch gekennzeichnet, dass** eine Vielzahl von Flurförderzeugen mit unterschiedlichen Energiespeichern vorgesehen ist.

9. Vorrichtung nach einem der Ansprüche 1 bis 8, **dadurch gekennzeichnet, dass** der zu erwartende Verbrauch der Flurförderzeuge projiziert wird und mit einem Verbrauch von anderen Verbrauchern durch die Netzsteuerung abgestimmt wird.

10. Vorrichtung nach einem der Ansprüche 1 bis 9, **dadurch gekennzeichnet, dass** an das Gleichstromnetz mindestens ein Ladegerät angeschlossen ist, das über einen Gleichspannungswandler den mitgeführten Energiespeicher eines angeschlossenen Flurförderzeugs laden kann.

11. Vorrichtung nach einem der Ansprüche 1 bis 10, **dadurch gekennzeichnet, dass** als elektrische Verbraucher auch automatisch fahrende Flurförderzeuge vorgesehen sind.

12. Vorrichtung nach einem der Ansprüche 1 bis 11, **dadurch gekennzeichnet, dass** eine Steuerung für Fahraufträge (WMS) vorgesehen ist, die mit der Netzsteuerung anstehende Fahraufträge derart einteilt, dass eine vorbestimmte Menge an elektrischer Leistung, die dem Gleichstromnetz entnommen wird, nicht überschritten wird.

13. Vorrichtung nach einem der Ansprüche 1 bis 12, **dadurch gekennzeichnet, dass** als interne elektrische Energiespeicher Kondensatoren, insbesondere Ultrakondensatoren vorgesehen sind.

14. Vorrichtung nach einem der Ansprüche 1 bis 13, **dadurch gekennzeichnet, dass** als interne elektrische Energiespeicher einen Festkörperakkumulator, Li-Ionen Batterie und/oder Na-Ionen-Batterien aufweist.

15. Vorrichtung nach einem der Ansprüche 1 bis 14, **dadurch gekennzeichnet, dass** die Netzsteuerung mindestens einen der folgenden Betriebsmodi aufweist: eine kurzfristige Netzstützung mit deutlich weniger als 1 kWh Energie, eine kurze Netzstützung mit weniger als 1kWh Energie, eine mittelfristige Netzstützung 1 ... 10 kWh Energie und eine dauernde Netzstützung von mehr 1h Dauer mit einer Energie von 1 ... 100 kWh.
